# EUROPÄISCHE PATENTANMELDUNG

(11) **EP 0 644 013 A1**
(43) Veröffentlichungstag der Anmeldung: **22.03.1995**
(21) Anmeldenummer: 94114363.8
(22) Anmeldetag: 13.09.1994
(51) Int. Cl.: B23K 9/10, B23K 9/20

(54) **Schweissstrom-Schaltung**

(30) Priorität: 14.09.1993 DE 4331200
(71) Anmelder: HBS BOLZENSCHWEISSSYSTEME GmbH & Co. KG, D-85221 Dachau (DE)
(72) Erfinder: Reiter, Thomas, Dr., D-85203 Dachau (DE)
(74) Vertreter: Strehl Schübel-Hopf Groening & Partner

(57) **Zusammenfassung**

Zur Erzeugung eines Stromflusses hoher Stromstärke und kurzer, aber nicht zu kurzer Dauer werden mehrere Kondensatoren **C1∼C3,** die parallel aufgeladen werden können, nacheinander derart entladen, daß die Entladestromimpulse einander teilweise überlappen. Wird die Schaltung zur Erzeugung des Schweißstroms für die Lichtbogen-Bolzenschweißung eingesetzt, so läßt sich ein Lichtbogen längerer Brenndauer erzeugen, wie er insbesondere beim Schweißen von Hohlbolzen benötigt wird.

## Beschreibung

Aus DE-A-2 230 915 ist eine Schaltung bekannt, die einen Stromfluß hoher Stromstärke und kurzer Dauer, wie er insbesondere zur Lichtbogen-Bolzenschweißung benötigt wird, durch Entladung eines Kondensators erzeugt. Ähnliche Schaltungen sind in DE-C-3 201 979 und DE-A-3 614 271 beschrieben.

Bei den bekannten Schaltungen wird der Kondensator über den Schweißlichtbogen sehr schnell entladen, so daß der Lichtbogen nur über eine entsprechend kurze Zeit brennt. Insbesondere beim Anschweißen von Hohlbolzen, bei denen der Lichtbogen mit Hilfe eines Magnetfeldes um die gesamte anzuschweißende Ringfläche herum bewegt wird, darf jedoch die Lichtbogen-Brennzeit nicht zu kurz sein. Eine Verlängerung der Entladezeit durch einen Vorwiderstand verbietet sich wegen der dann auftretenden Verluste.

Der Erfindung liegt die Aufgabe zugrunde, eine Schaltung anzugeben, die einen Stromfluß hoher Stromstärke und kurzer, aber nicht zu kurzer Dauer, insbesondere zur Erzeugung eines zur Lichtbogen-Bolzenschweißung geeigneten Schweißstroms, anzugeben.

Die erfindungsgemäße Lösung dieser Aufgabe ist im Anspruch 1 gekennzeichnet. Die danach im Entladekreis vorgesehenen mindestens zwei Kondensatoren werden zeitlich versetzt nacheinander entladen. Dadurch läßt sich die in den Kondensatoren insgesamt eingespeicherte elektrische Energie, deren Menge sich nach dem Verwendungszweck, etwa nach dem Querschnitt des anzuschweißenden Bolzens, richtet, über eine längere Zeitspanne zugeführt, ohne daß Verluste in Kauf genommen werden müssen.

Wird der erzeugte Strom für einen Lichtbogen-Schweißvorgang benutzt, so werden die aufeinanderfolgenden Entladungen der einzelnen Kondensatoren gemäß Anspruch 2 zeitlich so gesteuert, daß der im Überlappungsbereich aufeinanderfolgender Stromimpulse auftretende Minimalstrom zur Aufrechterhaltung des Lichtbogens ausreicht.

Die Weiterbildung der Erfindung nach Anspruch 3 gestattet es, den beim Lichtbogenschweißen erforderlichen, dem eigentlichen Schweißvorgang vorausgehenden Lichtbogen-Zündstrom durch eine einfache schaltungstechnische Maßnahme zu erzeugen.

Die Maßnahme des Anspruchs 4 ergibt einen wirksamen Schutz gegen unzulässige Berührungsspannung bei abgeschaltetem Gerät.

Anspruch 5 bezieht sich auf eine vorteilhafte Weiterbildung, mit der sich die bei der Kondensatorentladung zur Verfügung stehende elektrische Energie entsprechend dem Anwendungszweck begrenzen läßt.

Die nach Anspruch 6 vorgesehene Schaltungsmaßnahme dient zur Verhinderung einer Gegenaufladung der Kondensatoren durch einen beim Einschwingen des Entladestroms entstehenden (negativen) Strom.

Erfolgt die Aufladung der Kondensatoren etwa über einen Netztransformator, so ist die Weiterbildung der Erfindung nach den Ansprüchen 7 bis 9 insofern von Vorteil, als sie eine Überlastung des Transformators insbesondere zu Beginn der Ladephase verhindert.

Ein bevorzugtes Ausführungsbeispiel der Erfindung wird nachstehend anhand der Zeichnung näher erläutert. Darin zeigt
- Figur 1: ein Schaltbild,
- Figur 2: den zeitlichen Verlauf des Ladestroms und
- Figur 3: den zeitlichen Verlauf des Entladevorgangs in der Schaltung nach Figur 1.

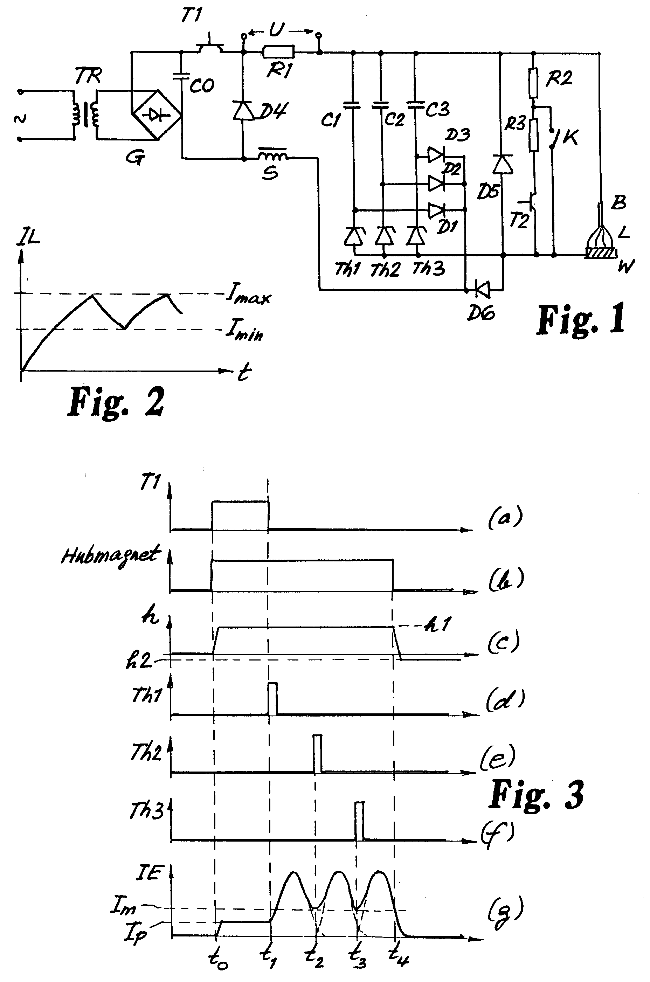

Gemäß Figur 1 liegt eine Netz-Wechselspannung über einen Transformator **TR** an einem Brückengleichrichter **G**, zwischen dessen Ausgangsklemmen ein Pufferkondensator **C0** liegt.

Zur Speicherung der elektrischen Energie umfaßt der Ladekreis in dem Ausführungsbeispiel nach Figur 1 drei an den Ausgang des Gleichrichters **G** angeschlossene Parallelzweige, deren jeder einen Kondensator **C1**, **C2**, **C3** und einen mit diesem in Serie liegende Diode **D1**, **D2**, **D3** enthält.

Der Ladestrom fließt aus der von dem Transistor **TR**, dem Gleichrichter **G** und dem Pufferkondensator **C0** gebildeten Stromquelle über einen Schalttransistor **T1**, einen mit diesem in Serie liegenden Widerstand **R1**, die drei die Kondensatoren **C1∼C3** enthaltenden Parallelzweige sowie eine Spule **S** zurück zur Stromquelle. Der am Widerstand **R1** auftretende Spannungsabfall **U** oder ein davon abgeleitetes Signal liegt als Steuersignal an der Basis des in dem Ausführungsbeispiel als Feldeffekttransistor ausgebildeten Schalttransistors **T1**.

Parallel zu der den Widerstand **R1**, die drei Kondensator-Parallelzweige und die Spule **S** enthaltenden Serienschaltung liegt eine Diode **D4**, die bezüglich des aus dem Gleichrichter **G** stammenden Ladestroms für die Kondensatoren **C1∼C3** in Sperrrichtung gepolt ist.

Zu Beginn des Ladevorgangs ist der Schalttransistor **T1** geschlossen. Erreicht der Ladestrom **IL**, dessen zeitlicher Verlauf in dem Diagramm nach Figur 2 veranschaulicht ist, einen Wert **I**_{**max**}, so erreicht der Spannungsabfall **U** am Widerstand **R1** einen Wert, der den Schalttransistor **T1** sperrt.

Nun erzeugt die durch den Ladestrom in der Induktivität der Spule **S** gespeicherte magnetische Energie einen Stromfluß durch die Diode **D4**, den Widerstand **R1** und die drei Kondensatorzweige **C1∼C3**. Ist dieser Stromfluß auf einen Wert **I**_{**min**} abgesunken, so erreicht die Spannung **U** am Widerstand **R1** einen Wert, bei dem der Schalttransistor **T1** wieder schließt, so daß die weitere Aufladung der Kondensatoren **C1∼C3** aus dem Gleichrichter **G** und dem Pufferkodensator **C0** erfolgt, wobei gleichzeitig wieder in der Spule **S** magnetische Energie gespeichert wird.

Insgesamt ergibt sich ein zwischen den Werten **I**_{**max**} und **I**_{**min**} schwankender, im Mittel konstanter und vom Ladezustand der Kondensatoren **C1∼C3** unabhängiger Ladestrom. Wegen der Begrenzung des Ladestroms auf den Wert **I**_{**max**} wird eine Überlastung des Transformators **TR** und des Gleichrichters **G** auch zu Beginn der Ladephase, wenn die Kondensatoren **C1∼C3** leer sind und entsprechend hohen Strom ziehen, vermieden.

Der Entladekreis der in Figur 1 gezeigten Schaltung umfaßt die drei Kondensatoren **C1∼C3**, die jeweils in Serie mit einem Thyristor **Th1**, **Th2**, **Th3** liegen. Die so gebildeten drei Parallelzweige liegen parallel zu der Entladestrecke, die in dem Ausführungsbeispiel nach Figur 1 von einem zwischen einem Bolzen **B** und einem Werkstück **W** erzeugten Lichtbogen **L** gebildet wird.

In einem weiteren Parallelzweig liegt eine Diode **D5**, die bezüglich des aus den Kondensatoren **C1∼C3** stammenden Entladestroms in Sperrichtung gepolt ist.

Ein weiterer, zu den Kondensatorzweigen paralleler Zweig enthält eine Serienschaltung aus zwei Widerständen **R2**, **R3** und einem Schalttransistor **T2**, bei dem es sich in der Schaltung nach Figur 1 wieder um einen Feldeffekttransistor handelt. Der Widerstand **R3** und der Schalttransistor **T2** sind ferner über einen Schalter **K** überbrückt.

Zwischen dem Werkstück **W** und der von den Kondensatoren **C1∼C3** abgewandten Klemme des Gleichrichters **G** liegt ferner eine Diode **D6**, die bezüglich des Gleichrichters **G** in Durchlaßrichtung gepolt ist.

Der gesamte, die Entladung der Kondensatoren **C1∼C3** umfassende Schweißvorgang wird nachstehend anhand der Figur 3 erläutert. Darin zeigen die Kurven
(a) den Schaltzustand des Schalttransistors **T1**,
(b) den Erregungszustand eines den Bolzen **B** vom Werkstück **W** abhebenden, in Figur 1 nicht gezeigten Hubmagneten,
(c) die Hubhöhe **h** des Bolzens **B** gegenüber dem Werkstück **W**,
(d)∼(f) den Schaltzustand der Thyristoren **Th1∼Th3**, und
(g) den zeitlichen Verlauf des Stromflusses zwischen dem Bolzen **B** und dem Werkstück **W**.

Zu Beginn des Schweißvorgangs sind die Kondensatoren **C1∼C3** aufgeladen und der Bolzen **B** auf das Werkstück **W** abgesenkt worden.

Zum Zeitpunkt **t0** wird der Schalttransistor **T1** geschlossen und der Hubmagnet betätigt, so daß der Bolzen **B** um die Höhe **h1** vom Werkstück **W** abgehoben wird. Über den Schalttransistor **T1**, den Widerstand **R1**, den Bolzen **B**, das Werkstück **W**, die Diode **D6** und die Spule **S** fließt nun ein Pilotstrom, der in der Kurve (g) mit **Ip** bezeichnet ist.

Zum Zeitpunkt **t1** wird der Thyristor **Th1** gezündet - Kurve (d) - so daß sich der Kondensator **C1** entlädt und der Entladestrom **IE** gemäß Kurve (g) entsprechend ansteigt und abfällt. In entsprechender Weise werden anschließend und nacheinander zu den Zeitpunkten **t2**, **t3** die Thyristoren **Th2**, **Th3** gezündet und dadurch die Kondensatoren **C2**, **C3** über den Lichtbogen **L** zwischen dem Bolzen **B** und dem Werkstück **W** entladen.

Die Zeitpunkte **t2** und **t3** sind so gelegt, daß die aus der Entladung der Kondensatoren **C1∼C3** stammenden Entladestromimpulse gemäß Kurve (g) einander überlappen. Das Ausmaß der Überlappung muß so groß sein, daß der im Überlappungsbereich auftretende Mindeststrom **Im** nicht unter den in der Praxis über dem Pilotstrom **Ip** gelegenen Wert sinkt, bei dem der Lichtbogen **L** gezündet bleibt.

Zum Zeitpunkt **t4** wird der Hubmagnet abgeschaltet, so daß der Bolzen **B** in das Schweißbad am Werkstück **W** eintaucht, was in Kurve (c) mit der negativen Hubhöhe **h2** angedeutet ist.

Durch die Kaskaden-Entladung der Kondensatoren **C1∼C3** wird die insgesamt gespeicherte Energie über einen längeren Zeitraum zur Verfügung gestellt, so daß der Lichtbogen **L** über eine Dauer brennt, die länger ist als wenn alle drei Kondensatoren gleichzeitig oder ein (entsprechend größerer) einziger Kondensator entladen wird. Die Gesamtbrenndauer vom Zeitpunkt **t1** bis zum Zeitpunkt **t4** läßt sich dabei in gewissen Grenzen durch die zeitliche Zündsteuerung der Thyristoren **Th1∼Th3** steuern.

Die Schaltung nach Figur 1 ist entsprechend der Größe der Kondensatoren **C1∼C3** für eine bestimmte maximale Schweißenergie und Schweißstromamplitude ausgelegt. Je nach Anwendungszweck kann es erforderlich sein, mit geringeren Schweißströmen bzw. geringerer Energie zu arbeiten. In diesem Fall können die Kondensatoren **C1∼C3** unmittelbar vor dem Schweißvorgang durch kurzzeitiges Einschalten des Schalttransistors **T2** über die Widerstände **R2**, **R3** teilweise entladen werden.

Nach Beendigung des Schweißvorgangs bzw. einer Folge von im gleichen Arbeitsgang durchgeführten Schweißvorgängen wird das Gerät über einen (nicht gezeigten) Schalter vom Netz getrennt. Mit diesem Netzschalter ist der den Widerstand **R3** und den Schalttransistor **T2** überbrückende Schalter **K** gekoppelt, der in diesem Moment schließt und etwaige Restladungen in den Kondensatoren **C1∼C3** über den Widerstand **R2** abführt. Auf diese Weise wird verhindert, daß an den Elektrodenausgängen (die in Figur 1 mit den Bolzen **B** bzw. dem Werkstück **W** verbunden sind) bei abgeschaltetem Gerät eine Spannung stehenbleibt.

## Patentansprüche

1. Schaltung zur Erzeugung eines Stromflusses hoher Stromstärke und kurzer Dauer, insbesondere zur Lichtbogen-Bolzenschweißung, durch Kondensatorentladung, dadurch gekennzeichnet,
daß der Entladekreis mindestens zwei Parallelschaltungen aus jeweils einem Kondensator (**C1∼C3**) und einem mit diesem in Serie liegenden Schaltelement (**Th1∼Th3**) enthält, und
daß die Schaltelemente (**Th1∼Th3**) zeitlich versetzt ansteuerbar sind.

2. Schaltung nach Anspruch 1, wobei die Schaltelemente (**Th1∼Th3**) so ansteuerbar sind, daß die Entladestromimpulse einander in einem mindestens dem Lichtbogen-Haltestrom entsprechenden Maß überlappen.

3. Schaltung nach Anspruch 1 oder 2, wobei der Entladekreis einen von einer Stromquelle (**TR, G, C0**) gespeisten weiteren Parallelzweig (**B, W, D6**) zur Erzeugung eines der Kondensatorentladung vorausgehenden Zündstroms aufweist.

4. Schaltung nach einem der Ansprüche 1 bis 4, wobei der Entladekreis einen beim Öffnen eines Geräte-Hauptschalters schließenden Schalter (**K**) enthält.

5. Schaltung nach einem der vorhergehenden Ansprüche, wobei der Entladekreis einen zu den Kondensatoren (**C1∼C3**) parallelen, wahlweise einschaltbaren Widerstandszweig (**R2, R3, T2**) zur Begrenzung der Kondensatorladung enthält.

6. Schaltung nach einem der vorhergehenden Ansprüche, wobei parallel zur Entladestrecke (**L**) und zu den Kondensatoren (**C1∼C3**) eine bezüglich des Ladestroms (**IL**) in Sperrichtung gepolte Diode (**D5**) liegt.

7. Schaltung nach einem der vorhergehenden Ansprüche, wobei der Ladekreis ein abhängig vom Ladestrom (**IL**) derart betätigbares Schaltelement (**T1**) enthält, das es den Ladestrom unabhängig von der Kondensatorladung im wesentlichen konstant hält.

8. Schaltung nach Anspruch 7, wobei das Steuersignal für das Schaltelement (**T1**) aus dem Spannungsabfall an einem mit ihm in Serie liegenden Widerstand (**R1**) stammt.

9. Schaltung nach Anspruch 8, wobei der Widerstand (**R1**) zusammen mit einer Induktivität (**S**) und einer bezüglich des Ladestroms (**IL**) in Sperrichtung gepolten Diode (**D4**) in einer zu den Kondensatoren (**C1∼C3**) parallelen Serienschaltung enthalten ist.
